# EUROPÄISCHE PATENTANMELDUNG

(11) **EP 1 366 850 A1**
(43) Veröffentlichungstag der Anmeldung: **03.12.2003**
(21) Anmeldenummer: 03011958.0
(22) Anmeldetag: 27.05.2003
(51) Int. Cl.: B23Q 5/38, B23Q 1/58

(54) **Linearbewegungsführung mit einer führungsschiene und einer Zahnstange**

(30) Priorität: 27.05.2002 EP 02011744
(71) Anmelder: Schneeberger Holding AG, 4914 Roggwil (CH); Güdel AG Switzerland, 4900 Langenthal (CH)
(72) Erfinder: Schröppel, Winfried, 72800 Eningen u.A. (DE); Dann, Thomas, 76307 Karlsbad (DE); Holzäpfel, Werner, 75210 Keltern (DE); Zulauf, Walter, 4937 Ursenbach (CH)
(74) Vertreter: EGLI-EUROPEAN PATENT ATTORNEYS

(57) **Zusammenfassung**

Bei einer Linearbewegungsführung, umfassend eine Schiene (3), an der Laufflächen (6) für Wälzkörper ausgebildet sind, mit den Wälzkörpern sich ein Schlitten (5) auf der Schiene (3) abstützt und entlang einer Linearbewegungsachse (7, 21) der Schiene verschiebbar ist, wobei an der Schiene (3) eine mit einer Verzahnung (16) versehene Zahnstange (2) befestigbar ist, die eine parallel zur Linearbewegungsachse (7) der Schiene verlaufende Verzahnung aufweist, soll trotz einer grossen Länge der einstückigen Schiene (3) die Erfüllung hoher Qualitätsanforderungen hinsichtlich Lagetoleranz und Belastbarkeit ermöglicht werden. Hierfür wird eine einstückige Schiene (3) vorgeschlagen, an der eine mehrstückige Zahnstange (2) befestigt ist, die mehrere einzelne Zahnstangensegmente (15) aufweist.

## Beschreibung

Die Erfindung betrifft eine Linearbewegungsführung, umfassend eine bezüglich ihrer Querschnittsform profilierte Führungsschiene, an der zumindest eine Tragfläche für Wälzkörper ausgebildet ist, auf der sich ein Schlitten über zumindest einige der Wälzkörper auf der Schiene abstützt, wobei die Wälzkörper in zumindest einer kanalartigen Ausnehmung des Schlittens angeordnet sind, der Schlitten relativ zur Schiene entlang einer Linearbewegungsachse der Schiene verschiebbar ist, und eine an der Schiene befestigbare Zahnstange, die eine parallel zur Linearbewegungsachse der Schiene verlaufende Verzahnung aufweist. Die Erfindung betrifft zudem ein Verfahren nach dem Oberbegriff von Anspruch 9.

Um in Maschinen oder Anlagen lineare Bewegungen ausführen zu können, sind Linearbewegungsführungen bekannt, die eine Schiene aufweisen, an der ein Schlitten über Wälzkörper geführt und gelagert ist. Bei einem bestimmten Typ von Linearbewegungsführungen ist zusätzlich eine Zahnstange vorhanden, die mit der Schiene verbunden ist und parallel zu dieser verläuft. In die Zahnstange können beispielsweise ein oder mehrere Ritzel eingreifen. Eine auf das Ritzel übertragene rotatorische Antriebsbewegung führt zu einer linearen Abrollbewegung des Ritzels, genauer gesagt der Mittelachse des Ritzels, parallel zur Linearbewegungsachse. Sind ein oder mehrere auf der Schiene angeordnete Schlitten mit dem Ritzel wirkverbunden, so werden auch die Schlitten von der Antriebsbewegung auf der Schiene mitgenommen.

Als erste Untergruppe dieses Typus von Linearbewegungsführungen sind solche vorbekannt, bei denen die Schiene und die Zahnstange im wesentlichen die gleiche Länge aufweisen und einstückig miteinander verbunden bzw. ausgebildet sind. Derartige Linearbewegungsführungen sind beispielsweise durch die Produkte Schneeberger Monorail MZ, der W. Schneeberger AG (Roggwil, Schweiz) und INA KUVE..SB ZHP, der INA-Schaeffler KG (Herzogenaurach, Bundesrepublik Deutschland), vorbekannt. Als nachteilig hieran wird jedoch empfunden, dass sich hiermit keine Führungen mit einer einstückigen Schiene grösserer Länge fertigen lassen, die zudem hohen Qualitätsanforderungen gerecht werden.

Fertigungsbedingt war es bisher nicht oder höchstens nur mit einem ganz erheblichen Aufwand möglich, eine solche einstückige, verzahnte Linearbewegungsführung herzustellen, die trotz einer grösseren Länge, beispielsweise 4 m und mehr, auch hochpräzise und hochbelastbar ist. Problematisch ist unter anderem, geringe Lagetoleranzen der Schiene und der Zahnstange zu erzielen, beispielsweise in Bezug auf Biegung und Torsion. Aufgrund der zur Erreichung einer hohen Belastbarkeit erforderlichen Härtung der Zahnstange tendiert die Schiene zum Verzug. Ein Verzug, insbesondere in Form von einer Torsion der Zahnstange, kann aber auch schon alleine durch den zur Erzeugung einer Verzahnung üblicherweise vorgesehenen Zerspannungsvorgang entstehen. Aufgrund eines zur Korrektur der Torsion dann vorgesehenen Richtvorganges besteht zwar die Möglichkeit, den Torsionsfehler zu korrigieren. Allerdings hat der Richtvorgang dann oftmals einen Teilungsfehler der Verzahnung zur Folge. Insbesondere bei der einstückig mit der Schiene verbundenen Zahnstange besteht das Problem, dass sich Fehler bezüglich der Lage der einzelnen Zähne über die Länge der Zahnstange aufsummieren und auf diese Weise ganz erhebliche sogenannte Summenteilungsfehler entstehen können.

Aus diesen Gründen werden derartige Linearbewegungsführungen üblicherweise nur mit einer maximalen Länge von 1,6 m angeboten. Ist eine längere Führung erforderlich, so müssen mehrere dieser einstückigen Schiene/Zahnstangen-Komponenten aneinander gefügt werden. Bei grösseren Längen, beispielsweise bei 4 m Länge und mehr, entsteht dann aber eine Vielzahl von Fugen zwischen aufeinander folgenden Schienenabschnitten, die die Wälzkörper überfahren müssen. Dies kann sich nachteilig auf die Lebensdauer der Wälzkörper auswirken.

Es ist auch ein anderer Typ derartiger Linearbewegungsführungen bekannt geworden, bei denen die Schiene und die Zahnstange im wesentlichen die gleiche Länge aufweisen und jeweils für sich genommen einstückig ausgebildet sind. Die Schiene und die Zahnstange müssen miteinander verbunden werden, beispielsweise durch Schraubenverbindungen. Aufgrund der grossen Länge der Schiene und der Zahnstange können sich Lagefehler der für die Schraubenverbindungen vorgesehenen Löcher der Schiene und der Zahnstange aufsummieren, so dass diese nicht mehr miteinander fluchten. Um diesen Fertigungsfehler zu kompensieren, bedarf es eines grossen Aufwandes, sofern dies aufgrund der Grösse des Fehlers überhaupt möglich ist. Zudem muss der Maschinenhersteller, der eine solche Führung beispielsweise in eine Werkzeugmaschine einbauen möchte, die Schiene und die Zahnstange selbst miteinander fügen, was für den Maschinenhersteller einen grossen Montage- und Justieraufwand bedeutet.

Der Erfindung liegt deshalb die Aufgabe zugrunde, eine Linearbewegungsführung der eingangs genannten Art zu schaffen, die trotz einer grossen Länge einer einstückigen Schiene die Erfüllung hoher Qualitätsanforderungen hinsichtlich Lagetoleranz, Belastbarkeit und Führungsgenauigkeit bei möglichst geringem Herstellungsaufwand ermöglicht.

Die Aufgabe wird bei einer Linearbewegungsführung nach dem Oberbegriff von Anspruch 1 erfindungsgemäss durch eine einstückige Schiene gelöst, an der eine mehrstückige Zahnstange befestigt ist, die mehrere einzelne Zahnstangensegmente aufweist. Die Aufgabe wird zudem durch ein Verfahren gemäss Anspruch 9 gelöst.

Erfindungsgemäss ist vorgesehen, eine gattungsgemässe Linearbewegungsführung mit einer Schiene zu bilden, an der mehrere einzelne Segmente einer Zahnstange befestigt sind. Vorzugsweise ergibt die Summe der Teillängen der Segmente eine Gesamtlänge der Zahnstange, die zumindest im wesentlichen der Länge der einstückigen Schiene entspricht. In diesem Fall entspricht also die Summe der Teillängen der Zahnstangensegmente der Gesamtlänge der erfindungsgemässen Führung.

Sowohl die Schiene als auch die Zahnstange bzw. Zahnstangensegmente sollten in sich steif sein. Im Zusammenhang mit der Erfindung kann unter "steif" verstanden werden, dass sich die gefügte Schiene/Zahnstange bei den zu erwartenden Belastungen höchstens minimal elastisch verformt. Unter einer Schiene im Sinne der vorliegenden Erfindung soll ferner eine Führungsschiene verstanden werden, bei der durch eine Profilierung der Schiene Tragflächen ausgebildet sind, die als Bewegungsbahnen für Wälzkörper vorgesehen sind. Auf die Linearbewegungsführung einwirkende Belastungen sind über die Wälzkörper und die Tragflächen in die Schiene einleitbar. Die Profilierung verleiht der Schiene eine von einem rechteckigen Querschnitt abweichende Querschnittsform.

Gegenüber insgesamt einstückigen Linearbewegungsführungen hat die erfindungsgemässe Ausgestaltung zunächst den Vorteil, dass die Schiene und Zahnstange unabhängig voneinander hergestellt werden können und mögliche Fertigungsfehler der einen Komponente die jeweils andere Komponente nicht beeinflusst. Sollte die Schiene beispielsweise aufgrund von Torsion einen Lagefehler aufweisen, so kann die Schiene vor dem Fügevorgang mit den Zahnstangensegmenten gerichtet werden, ohne dass hierbei auf die Zahnstange Rücksicht genommen werden muss. Anders als bei vorbekannten Führungen kann ein aufgrund des Richtvorganges der Schiene möglicher Fehler bei der Zahnstange sicher vermieden werden, was die Einhaltung von engen Lagetoleranzen erleichtert.

Es hat sich überraschenderweise gezeigt, dass sich die Aufteilung der Zahnstange in mehrere Segmente positiv auf die erzielbare Genauigkeit der Zahnstange auswirkt. Auch die Zahnstange ist hinsichtlich Lagetoleranzfehler kritisch, die wiederum aber vor allem bei grossen Längen der Zahnstange auftreten. Die Aufteilung der Zahnstange in kleinere Segmente ermöglicht nun zum einen bei Lagetoleranzfehlern und/oder Verzahnungsfehlern für jedes einzelne Segment Korrekturmassnahmen zu ergreifen. Zum anderen ist bereits aufgrund des erfindungsgemässen Konzepts die Wahrscheinlichkeit, dass grössere Lagetoleranzfehler bei der Zahnstange auftreten, weitaus geringer als bei einer über die gesamte Länge einstückigen Zahnstange. Es ist nämlich höchst unwahrscheinlich, dass sich von einem Ende der erfindungsgemässen Zahnstange bis zu deren anderen Ende sämtliche einzelne Lagetoleranzfehler aufaddieren. Es ist vielmehr zu erwarten, dass sich Lagetoleranzfehler von einzelnen Segmenten gegeneinander ausgleichen.

Es hat sich auch gezeigt, dass sich mit erfindungsgemässen Linearbewegungsführungen einstückige Schienenlängen von bis zu einer Länge von 6 m und mehr bei hoher Genauigkeit der Schiene und Zahnstange erreichen lassen. Da aufgrund des erfindungsgemässen Konzepts sowohl die Schiene als auch die Zahnstange selbst bei grösseren Längen gehärtet und oder geschliffen werden können, ohne hierbei grössere, nicht korrigierbare Fertigungsfehler befürchten zu müssen, sind auch hochbelastbare lange Linearbewegungsführungen erzielbar.

Solche Linearbewegungsführungen können eine gute Steifigkeit bei gleichzeitig hoher Führungsgenauigkeit aufweisen.

In bevorzugten Ausführungsformen der Erfindung ist die Schiene in einer Weise konstruktiv ausgelegt, durch die eine maximale geometrische Verformung der für die Wälzkörper vorgesehenen Tragflächen der Schiene von nicht mehr als 20µm, vorzugsweise nicht mehr als 15µm, stattfindet. Diese maximalen Verformungen sind bezogen auf die bei einer fachmännischen Befestigung, beispielsweise mittels Schrauben, der Schiene an ihrem Träger - der Zahnstange - und/oder beim Betrieb der Linearbewegungsführung, auftretenden üblichen Belastungen.

Im Rahmen der Erfindung hat es sich zudem gezeigt, dass die erfindungsgemässen Vorteile besonders gut zum Tragen kommen, wenn die Länge der Zahnstangensegmente kleiner oder gleich 1 m, bevorzugt kleiner oder gleich 0,7 m gewählt sind. Die Länge der Zahnstangensegmente sollte insbesondere aus einem Bereich von 250 mm bis 600 mm, besonders bevorzugt von 350 mm bis 450 mm, insbesondere ca. 400 mm oder ca. 300 mm, gewählt sein.

In einer bevorzugten Ausführungsform, in der die Schiene und die Zahnstange bereits vom Führungshersteller gefügt und zusammen mit einem oder mehreren Schlitten als komplett vorkonfigurierte Baugruppe "Linearbewegungsführung" ausgeliefert wird, können sowohl beim Hersteller als auch bei dessen Kunden weitere erhebliche Vorteile erzielt werden. Anders als bisher bei gattungsgemässen mehrteiligen Führungen, hat der Kunde den Vorteil, eine nach seinen Bedürfnissen bereits vorkonfektionierte und sofort in seine Maschine einbaubare Führung geliefert zu bekommen. Der Montage- und Justieraufwand kann dadurch beim Endkunden erheblich reduziert werden.

Der Führungshersteller kann hierbei für seine Produkte durch Qualitätskontrolle sicherstellen, dass die gefügte Schiene trotz einer grossen Länge auch tatsächlich hohen qualitativen Anforderungen genügt. Da gattungsgemässe Linearführungen bisher üblicherweise erst vom Endkunden gefügt worden sind, hatte der Führungshersteller bisher auch kaum einen Überblick, ob seine in Maschinen eingebauten Linearführungen tatsächlich die angestrebten Qualitätskriterien einhalten.

Der Kosten- und Logistikaufwand kann beim Hersteller vorteilhafterweise reduziert werden, wenn unterschiedliche Längen von Linearführungen aus einer unterschiedlichen Anzahl von Zahnstangensegmenten zusammengesetzt werden. Je stärker die Anzahl an unterschiedlichen Zahnstangensegmenten reduziert wird, desto grösser ist der hierdurch für den Hersteller erzielbare Vorteil.

In einer bevorzugten Ausführungsform befindet sich die Verzahnung auf einer der Oberseite der Schiene gegenüberliegenden jedoch abgewandten Seite. Die Tragflächen befinden sich dann an den beiden Seiten der Schiene zwischen ihrer Oberseite und der Verzahnung. Diese geometrische Anordnung hat den Vorteil, dass vom Schlitten in die Schiene eingeleitete Belastungen den korrekten Eingreif eines Antriebszahnrades in die Verzahnung der Zahnstange nicht beeinträchtigt.

Weitere bevorzugte Ausgestaltungen der Erfindung ergeben sich aus den Patentansprüchen, den Zeichnungen und der Beschreibung.

Die Erfindung wird anhand den in den Figuren schematisch dargestellten Ausführungsbeispielen näher erläutert; es zeigen:
- Fig. 1: eine perspektivische Darstellung einer erfindungsgemässen Linearbewegungsführung;
- Fig. 2: eine Querschnittsdarstellung der Linearbewegungsführung aus Fig. 1;
- Fig. 3: eine Stossstelle von zwei an einer Führungsschiene befestigter Zahnstangensegmente;
- Fig. 4: eine perspektivische Teildarstellung einer Maschine mit einer erfindungsgemässen Linearbewegungsführung;
- Fig. 5: eine perspektivische Darstellung einer Führungsschiene mit daran angeschraubten Zahnstangensegmenten.

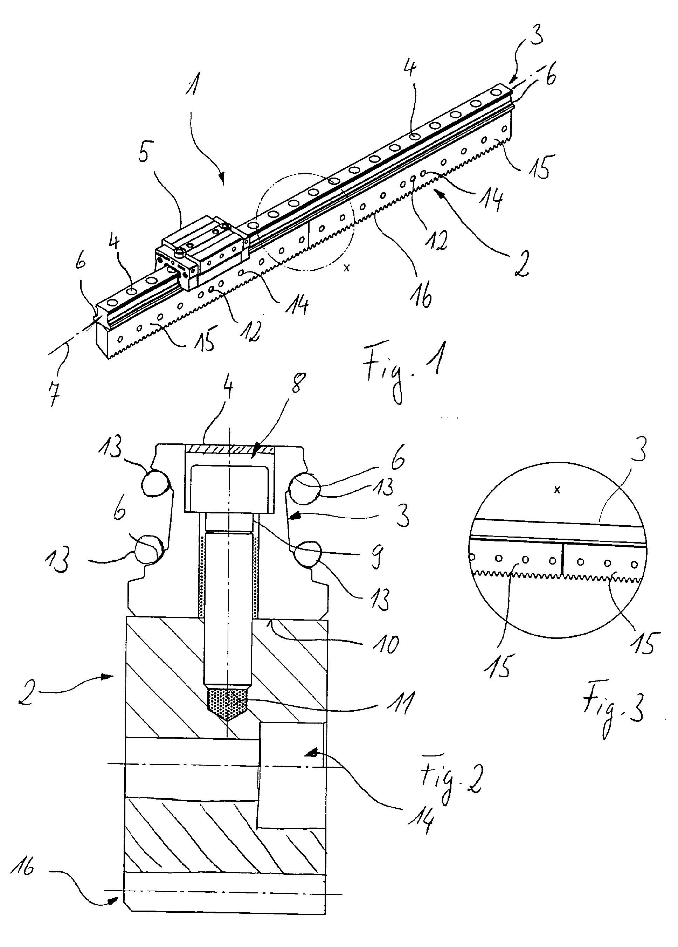

Die in Fig. 1 gezeigte Linearbewegungsführung 1 weist eine Zahnstange 2 auf, die mit einer Führungsschiene 3 durch mehrere Schraubverbindungen verbunden ist. In der Darstellung von Fig. 1 sind die an sich bekannten Schraubverbindungen lediglich durch in eine Oberseite der Schiene einsetzbare Kappen 4 zur Abdeckung der für die Schraubenverbindungen in der Schiene 3 vorgesehenen Durchgangsbohrungen angedeutet.

Auf der einstückigen und im Ausführungsbeispiel ca. 6 m langen, möglichst steifen Führungsschiene 3 ist ein im Querschnitt im wesentlichen U-förmiger Schlitten 5 angeordnet, in dessen beiden Schenkel jeweils zwei in sich geschlossene und nicht näher dargestellte Wälzkörper-Umläufe ausgebildet sind. In diesen Umläufen zirkulieren jeweils Wälzkörper, wie beispielsweise Kugeln oder Rollen. Die Wälzkörper sind nicht durch Achsen oder Wellen gebunden, sondern bewegen sich bzw. zirkulieren frei in den kanalartigen Wälzkörperumläufen. Die Wälzkörper und der Schlitten führen hierdurch zueinander translatorische Relativbewegungen aus. Im Bereich einer nicht näher dargestellten Tragzone der Umläufe liegen die Wälzkörper sowohl am Schlitten 5 als auch an seitlichen Tragflächen 6 der Schiene 3 an. Hierdurch ist der Schlitten 5 sowohl in an sich vorbekannter Weise auf der Schiene 3 gelagert als auch relativ zur Schiene entlang einer Linearbewegungsachse 7 längsbeweglich.

Die Tragflächen 6 befinden sich an den beiden parallel zur Linearbewegungsachse 7 verlaufenden Seiten der Schiene 3. An der Schiene des dargestellten Ausführungsbeispiel sind auf jeder Seite der Schiene 3 jeweils zwei in Bezug auf die Linearbewegungsachse 7 parallel zueinander verlaufende und im Querschnitt gekrümmte Trägflächen 6 vorhanden. In Bezug auf die Querschnittsfläche der Schiene 3 sind die beiden auf jeweils einer Schienenseite liegenden Tragflächen 6 - bei Vernachlässigung ihrer Krümmung - zueinander geneigt. Dies führt dazu, dass Vektoren - welche die Kräfte zwischen den Wälzkörpern 13 und den beiden Tragflächen 6 einer der beiden Schienenseiten wiedergeben - nicht parallel zueinander verlaufen. Die Kräfte werden in Richtung von Flächennormalen der Tragflächen übertragen. Ebenso verlaufen auch die Kraftvektoren zu den beiden unteren Tragflächen bzw. den beiden oberen Tragflächen nicht parallel zueinander.

Diese an sich bekannte Ausrichtung der Tragflächen 6 trägt zur Erzielung einer guten Drehsteifigkeit der Schiene 3 bei. Eine solche Drehsteifigkeit ist insbesondere dann von Relevanz, wenn vom Schlitten 5 ein Drehmoment in die Schiene eingeleitet wird. Anstelle der sich aus der gezeigten Anordnung der Tragflächen 6 ergebende O-förmige Ausrichtung der Kraftvektoren kann auch die an sich bekannte X-förmige Ausrichtung vorgesehen sein.

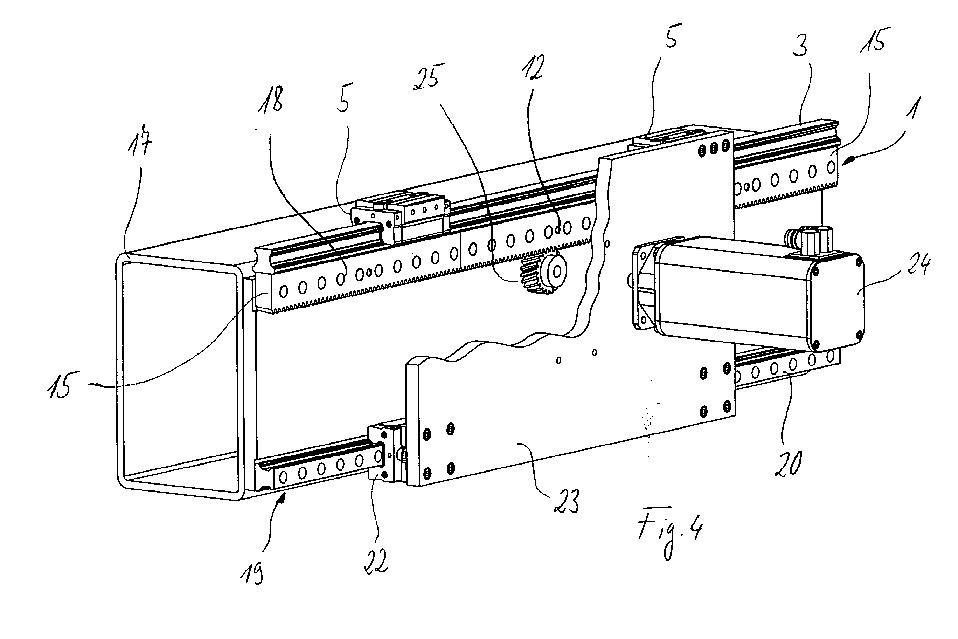

In der Schnittdarstellung von Fig. 2 ist eine in jeder der Durchgangsbohrungen 8 vorgesehene Stufe zu erkennen, die als Anschlag für den Kopf der in der jeweiligen Bohrung angeordneten Gewindeschraube 9 dient. Die Durchgangsbohrungen münden aus einer ebenen Unterseite 10 der Schiene, mit der diese flächig auf einer ebenfalls ebenen Oberseite der Zahnstange 2 gegenliegt.

Die in sich steife Zahnstange 2 weist ebenfalls aus ihrer Oberseite mündende Ausnehmungen auf. Diese sind jeweils als Sacklochbohrung 11 ausgebildet, die mit einem Innengewinde versehen sind. Die Ausnehmungen der Zahnstange fluchten mit der entsprechenden Durchgangsbohrung 8 der Schiene 3, so dass jeweils eine durch eine Durchgangsbohrung 8 durchgesteckte Schraube 9 in die entsprechende Sacklochbohrung 11 der Zahnstange 2 eingeschraubt werden kann. Die Zahnstange 2 weist zudem quer zu den Sacklochbohrungen 11 und quer zur Linearbewegungsachse 7 verlaufende weitere Befestigungslöcher 14 auf. Diese sind zur Befestigung der gesamten Linearführung an einem Maschinenstrukturteil, beispielsweise einem Gestell, einer Maschine, mittels weiteren Schrauben vorgesehen. Mittels in Durchgangslöcher 12 einzusetzenden (nicht dargestellten) Stiften kann die Führung zusätzlich mit dem entsprechenden Maschinenstrukturteil verstiftet werden.

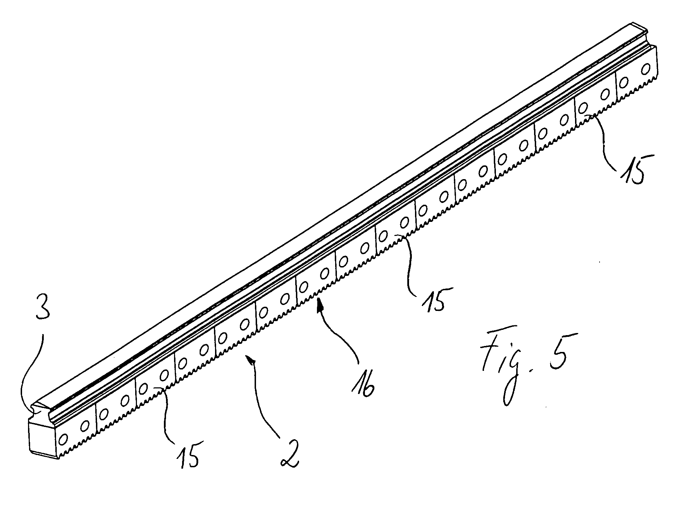

Wie in den Fig. 1, 3 und 5 gezeigt ist, setzt sich die Zahnstange 2 aus einzelnen Zahnstangensegmenten 15 zusammen, die unmittelbar aneinander gereiht und an der Schiene 3 befestigt sind. Für die Schiene mit einer Länge von 6000 mm sind insgesamt 15 Zahnstangensegmente mit einer Länge von jeweils 400 mm vorgesehen. Die Zahnstangensegmente 15 sind gegen die zu erwartenden Belastungen, wie beispielsweise Biegung oder Torsion, möglichst steif ausgebildet.

Jedes Zahnstangensegment 15 weist an seiner Unterseite eine Verzahnung 16 auf, beispielsweise eine Schrägverzahnung. Im Ausführungsbeispiel hat die Verzahnung einen Flankenwinkel von 20°. Die Verzahnung 16 ist gehärtet und geschliffen. Jedes der Zahnstangensegmente entspricht den Anforderungen der Verzahnungsqualität Stufe 5 der DIN 3961, DIN 3962, DIN 3967 und DIN 3963. Hierdurch weist die Linearbewegungsführung 1 im Bereich der Unterseite der Schiene 3 und parallel zur Linearbewegungsachse 7 über ihre gesamte Länge eine qualitativ hochwertige Verzahnung auf. Die Zahnstangensegmente 15 sind an ihren Stirnseiten so aneinandergereiht, dass sich über die gesamte Länge der auf diese Weise zusammengesetzten Zahnstange 2 eine durchgehende Verzahnung ergibt. Durch geeignete Ausrichtung aufeinanderfolgender Zahnstangensegmente 15 kann zum einen ein innerhalb eines engen Toleranzbandes liegender Summenteilungsfehler der Verzahnung über die gesamte Verzahnungslänge erreicht werden. Zum anderen kann hierdurch ein günstiger, insbesondere stufenloser und spielfreier, Übergang innerhalb der Verzahnung 16 von einem Zahnstangensegment 15 zum jeweils nächsten Zahnstangensegment 15 erzielt werden. Eine aufgrund von Übergängen zu befürchtende Belastung oder Spiel eines in der Verzahnung laufenden Ritzels kann hierdurch vermieden werden.

In Fig. 4 ist ein Anwendungsbeispiel für eine erfindungsgemässe Linearbewegungsführung 1 gezeigt, bei der an einer Schiene mehrere Zahnstangensegmente 15 befestigt sind. Auf der Schiene 3 sind zwei Schlitten 5 längsverschieblich angeordnet. Die Zahnstangensegmente 15 sind an einem Maschinengestell 17 durch Schraubverbindungen 18 befestigt und weisen in der Summe ihrer einzelnen Längen eine Gesamtlänge auf, die zumindest näherungsweise der Länge der einstückigen Schiene entspricht.

In diesem Ausführungsbeispiel ist auch eine zweite Linearbewegungsführung 19 vorgesehen, die am gleichen Maschinengestell 17 angeschraubt ist. Die zweite Linearbewegungsführung 19 weist eine Schiene 20 auf, deren Linearbewegungsachse 21 parallel zur Linearbewegungsachse 7 der ersten Linearbewegungsführung 1 verläuft. Auch auf dieser Schiene 20 sind zwei Schlitten 22 über Wälzkörper längsverschiebbar angeordnet. An den Schlitten 5, 22 der beiden Führungen ist ein Tisch 23 befestigt, der beispielsweise zu einer nicht näher dargestellten Holzbearbeitungsmaschine gehört. Mit einem Antrieb 24 des Tisches kann ein schrägverzahntes Ritzel 25 in Rotation versetzt werden. Das Ritzel 25 kämmt mit der Verzahnung 16 der Zahnstange 2, wodurch eine Antriebsbewegung des Tisches 23 generiert wird. Auf den Tisch 23 wirkende Kräfte bzw. Momente werden über die Linearbewegungsführungen 1, 19 in das Maschinengestell übertragen.

### Bezugszeichenliste

- 1: Linearbewegungsführung
- 2: Zahnstange
- 3: Führungsschiene
- 4: Kappen
- 5: Schlitten
- 6: Tragfläche
- 7: Linearbewegungsachse
- 8: Durchgangsbohrung
- 9: Gewindeschraube
- 10: Unterseite
- 11: Sacklochbohrung
- 12: Durchgangsloch
- 13: Wälzkörper
- 14: Befestigungsloch
- 15: Zahnstangensegment
- 16: Verzahnung
- 17: Maschinengestell
- 18: Schraubverbindungen
- 19: zweite Linearbewegungsführung
- 20: Schiene
- 21: Linearbewegungsachse
- 22: Schlitten .
- 23: Tisch
- 24: Antrieb
- 25: Ritzel

## Patentansprüche

1. Linearbewegungsführung, umfassend
eine bezüglich ihrer Querschnittsform profilierte und biegesteife Führungsschiene (3), an der zumindest eine Tragfläche (6) für Wälzkörper (13) ausgebildet ist, auf der sich ein Schlitten (5) über zumindest einige der Wälzkörper auf der Schiene abstützt, wobei die Wälzkörper (13) in zumindest einer kanalartigen Ausnehmung des Schlittens angeordnet sind, und der Schlitten relativ zur Schiene entlang einer Linearbewegungsachse der Schiene verschiebbar ist,
eine an der Schiene befestigbare Zahnstange, die eine parallel zur Linearbewegungsachse der Schiene verlaufende Verzahnung aufweist, **gekennzeichnet**
**durch** eine einstückige Schiene (3), an der eine mehrstückige Zahnstange (2) befestigt ist, die mehrere einzelne Zahnstangensegmente (15) aufweist.

2. Linearbewegungsführung nach Anspruch 1, **dadurch gekennzeichnet, dass** die einstückige Schiene (3) eine Länge von zumindest 3 m, vorzugsweise von zumindest 4 m und besonders bevorzugt von zumindest 5 m aufweist.

3. Linearbewegungsführung nach Anspruch 1 oder 2, **dadurch gekennzeichnet, dass** das längste Zahnstangensegment (15) eine Länge von kleiner oder gleich 1 m, vorzugsweise kleiner oder gleich 0,7 m, und besonders bevorzugt kleiner oder gleich 0,5 m, aufweist.

4. Linearbewegungsführung nach einem oder mehreren der vorhergehenden Ansprüche, **dadurch gekennzeichnet, dass** zumindest ein Segment (15) der Zahnstange (2) gehärtet und/oder geschliffen ist.

5. Linearbewegungsführung nach einem oder mehreren der vorhergehenden Ansprüche, **dadurch gekennzeichnet, dass** die Schiene (3) gehärtet ist.

6. Linearbewegungsführung nach einem oder mehreren der vorhergehenden Ansprüche, **dadurch gekennzeichnet, dass** die Verzahnung (16) an einer Unterseite der Zahnstange (2) angeordnet ist, die sich auf einer der Oberseite der Schiene (3) abgewandten Seite der Linearbewegungsführung befindet.

7. Linearbewegungsführung nach einem oder mehreren der vorhergehenden Ansprüche, **dadurch gekennzeichnet, dass** die Zahnstange mit Befestigungsausnehmungen (14) zur Aufnahme von Befestigungsmitteln wie Schrauben oder dergleichen versehen ist, wobei die Befestigungsmittel zur Befestigung der Linearbewegungsführung an einem Maschinenstrukturteil vorgesehen sind.

8. Maschine zur Ausführung zumindest einer Handhabungsund/oder Bearbeitungsfunktion, die eine Linearbewegungsführung umfasst, **gekennzeichnet durch** eine Linearbewegungsführung nach einem der Ansprüche 1 bis 7.

9. Verfahren zum Einbau einer Linearbewegungsführung, die eine profilierte Schiene und zumindest einen auf dieser mittels Wälzlagerelemente gelagerten sowie verfahrbaren Schlitten, und eine an der Schiene befestigte Zahnstange umfasst, **dadurch gekennzeichnet, dass** an der einstückigen Schiene zuerst mehrere Segmente der mehrteiligen Zahnstange befestigt werden, und anschliessend die auf diese Weise gefügte Linearbewegungsführung in die Maschine eingebaut wird.

10. Verfahren nach Anspruch 9, **dadurch gekennzeichnet, dass** zur Befestigung der Linearbewegungsführung in der Maschine die Zahnstange an der Maschine befestigt wird.
